# EUROPÄISCHE PATENTSCHRIFT

(11) **EP 3 501 276 B1**
(45) Veröffentlichungstag und Bekanntmachung des Hinweises auf die Patenterteilung: **21.09.2022**
(21) Anmeldenummer: 18202814.2
(22) Anmeldetag: 26.10.2018
(51) Int. Cl.: A01M 21/04

(54) **VERFAHREN ZUR THERMISCHEN WILDKRAUTBESEITIGUNG**
METHOD FOR THERMAL WEED REMOVAL
PROCÉDÉ D'ENLÈVEMENT THERMIQUE DES MAUVAISES HERBES

(30) Priorität: 07.12.2017 DE 102017222120
(43) Veröffentlichungstag der Anmeldung: 26.06.2019
(73) Patentinhaber: Kress, Markus, 89075 Ulm (DE)
(72) Erfinder: Kress, Markus, 89075 Ulm (DE)
(74) Vertreter: Sawodny, Michael-Wolfgang

(56) Entgegenhaltungen:
- EP-A1- 0 547 293
- EP-B1- 0 413 055
- WO-A1-2017/002093
- DE-U1- 9 112 971
- FR-A1- 2 756 704

## Beschreibung

Die Erfindung betrifft eine Vorrichtung zur thermischen Wildkrautbeseitigung mit einer Heizeinrichtung zur Erzeugung von Infrarot-Hitzestrahlen und einem Gehäuse mit Lüftungsschlitzen, wobei in dem Gehäuse die Heizeinrichtung angeordnet ist.

In der Landwirtschaft und für den privaten Pflanzenschutz in Haus und Garten führen zunehmende Umweltschutzmaßnahmen zur erhöhten Einschränkung beim Einsatz von chemischen Pflanzenschutzmitteln. Für die Beseitigung von Schadpflanzen werden aufgrund der hohen Umweltauflagen immer weniger chemische Pflanzenschutzmittel zugelassen. Als Alternative hierzu bietet sich der Einsatz von mechanischen und thermischen Verfahren als umweltfreundliche Lösung an.

Betreffend thermische Verfahren wird auf gasbetriebene Abflamm- und Infrarotgeräte verwiesen. Auch Heißluftgebläse und Infrarotbrenner sind als Unkrautvernichtungsgeräte im Stand der Technik beschrieben.

Wird ein thermisches Gerät zur Wildkrautvernichtung oder Unkrautvernichtung eingesetzt, so ist für die thermische Zerstörung einer Pflanze eine Temperatur oberhalb von 60° C nötig. Bei derartig hohen Temperaturen wird die Aderstruktur der Pflanze geschädigt und die Pflanze stirbt nach einigen Tagen sichtbar ab. In der Praxis werden die Pflanzen aber so lange behandelt, bis sie verbrennen, damit sofort ein sichtbarer Erfolg erzielt wird. Damit verbunden ist aber eine starke Geruchsbelästigung des Benutzers durch den aufsteigenden Qualm als Folge der Verbrennung.

Systeme, die eine Temperaturbehandlung von Unkraut mit Heißluft mit ca. 600° C ermöglichen, sind in der EP 2 540 162 beschrieben. Beim System der EP 2 540 162 wird erhitzte Luft über einen geschlossenen Metallkopf mit einem Durchmesser von ca. 6 bis 10 cm auf die zu behandelnde Pflanze geblasen. Nachteilig an den Heißluftgeräten ist, dass für eine relativ kleine, zu behandelnde Fläche eine hohe Leistung erforderlich ist. Im Fall eines typischen Heißluftgerätes zur Wildkraut- bzw. Unkrautbekämpfung beträgt die aufgenommene elektrische Leistung 2000 Watt wenn die zu behandelnde Fläche eine Größe von 85 cm² hat. Daraus ergibt sich ein Leistungsbedarf von 23,5 Watt/cm². Dieser Leistungsbedarf ist sehr hoch.

Für größere Flächen sind aus dem Stand der Technik elektrische Infrarotsysteme bekannt geworden, wie beispielsweise in der G 91 12 971.0 beschrieben. Das System gemäß der G 91 12 971.0 umfasst ebenfalls eine Metallglocke, die über die zu behandelnde Fläche vom Bediener mit einem Stiel geschoben wird. In der Glocke ist ein Heizelement angeordnet, das Infrarotstrahlen auf einer Fläche von ca. 250 cm² abstrahlt. Die erreichbaren Temperaturen der Infrarotstrahler gemäß der G 91 12 971.0 sind mit 800° C deutlich höher als bei Heißluftsystemen. In der Glocke ist gemäß der G 91 12 971.0 das Heizelement angeordnet, das auf einer Fläche von ungefähr 250 cm² abstrahlt. Nachteilig an dem System gemäß der G 91 12 971.0 ist, dass zum einen die Metallglocke unzulässig erwärmt wird und aufgrund der hohen Oberflächentemperatur der Glocke für den Anwender eine erhöhte Verletzungsgefahr bei versehentlicher Berührung bestand.

Aus der DE 35 44 101 A1 ist ein Infrarot-Koagulator bestehend aus mehreren Glühkörpern und mehreren Reflektoren bekannt geworden. Die vom Glühkörper ausgehende Wärme wird in Strahlungswärme umgesetzt, die so intensiv ist, dass das Eiweiß in den Blättern der Wildkräuter auch bei kurzzeitiger Einwirkung koaguliert. Auf Abstand zu den Wildkräutern wird der Infrarot-Koagulator durch Abstandshalter gehalten, wobei ein Abstand des Infrarot-Koagulators zum Boden zwischen 3 cm und 5 cm angegeben ist. Geringere Abstände sind in der DE 35 44 101 A1 nicht offenbart.

Die EP 0 413 055 B1 beschreibt einen mit Wärmestrahlung arbeitenden Unkrautvernichter mit einer Brennkammer für Brennstoff und einer Wärmeabstrahlfläche. Bei der EP 0 413 055 B1 wird mit Hilfe einer Heißluftpistole durch Anblasen Brennstoff über seinen Flammpunkt erhitzt und entzündet. Mit dem Entzünden des Brennstoffes erhöht sich die Temperatur des Heißluftstromes, der aus dem Unkrautvernichter austritt auf 1300°C. Wenn die Heißluft die vorgegebene Temperatur von 1300°C erreicht hat, wird der Unkrautvernichter über das zu vernichtende Unkraut hinweggeschoben, wobei ein Abstandshalter eingesetzt wird um einen gleichbleibenden Abstand zwischen der Austrittsöffnung für die Heißluft und dem Boden zu gewährleisten. Angaben zum Abstand sind in der EP 0 413 055 B1 aber nicht gemacht.

Die EP 2 540 162 A1 zeigt einen thermischen Unkrautvernichter mit einer elektrischen Heizeinrichtung zur Erzeugung von Heißluft, die in eine Glocke strömt und das unter der Glocke liegende Unkraut verbrennt. Der Abstand, den die Glocke vom Boden haben soll wird mit mehr als 2 cm angegeben.

Die EP0547293A1 zeigt eine andere Vorrichtung zur thermischen Wildkrautbeseitigung mit einer elektrischen Infrarotheizeinrichtung.

Aufgabe der Erfindung ist es somit, die Nachteile des Standes der Technik zu überwinden und insbesondere hohe Oberflächentemperaturen und damit ein erhöhtes Verletzungsrisiko zu vermeiden.

Erfindungsgemäß wird dies mit einer Vorrichtung gemäß Anspruch 1 und mit einem Verfahren gemäß Anspruch 6 oder 7 erreicht.

Im Gegensatz zur DE 35 44 101A1 mit mehreren Glühkörpern und Reflektoren weist die Erfindung nur einen einzigen Glühkörper auf. Das Gehäuse und die Vorrichtung umfasst Abstandsmittel, insbesondere Räder, die derart an der Vorrichtung angeordnet sind, dass die Heizeinrichtung in einem Abstand zum Boden gehalten wird. Um besonders gute Ergebnisse bei der Wildkraut- bzw. Unkrautvernichtung zu erzielen ist erfindungsgemäß vorgesehen, dass der Abstand zum Boden 1 mm bis <30 mm, insbesondere 2 mm bis 20 mm beträgt, insbesondere 4 bis 6 mm. Bei Versuchen hat sich ergeben, dass der maximale Abstand der Heizelemente zum Wildkraut bzw. Unkraut für ein sinnvolles Arbeiten nicht größer als 20 mm sein darf. Aus dem Stand der Technik in Form der DE 35 44 101 A1 sind aber größere Abstände von mehr als 30 mm bis zu 50mm bekannt geworden. Die EP 2 540 162 A1 diskutiert Abstände von mehr als 20 mm.

Die besten Ergebnisse lassen sich bei direktem Kontakt der Wildkräuter mit den Heizelementen erzielen. Allerdings lässt sich das Gerät bei zu geringem Abstand zum Boden nur schwer über den Boden führen und die Bewegung des Gerätes auf dem Boden ist stark eingeschränkt. Die Erfinder haben überraschend herausgefunden, dass bei einem Abstand der Heizelemente von 2 - 10 mm, insbesondere, 4 - 6 mm zum Boden sich die besten Ergebnisse zwischen Behandlungsdauer und Bewegungskomfort erzielen lassen.

Mit größer werdendem Abstand der Heizelemente zum Boden verlängert sich die Behandlungsdauer, weswegen bei einem Abstand größer 20 mm von den Heizelementen zum Wildkraut die Einwirkdauer so lang ist, dass eine effiziente Bekämpfung von Wildkräutern nicht mehr möglich ist. Dies zu erkennen ist eine Verdienst der Erfinder, da im Stand der Technik immer weit größere Abstände beschrieben sind. Eine Anregung diesen Abstand zu verkleinern kann der Fachmann dem Stand der Technik nicht entnehmen. Ganz besonders bevorzugt ist daher ein Abstand der Heizelemente vom Boden von ungefähr 5 mm. Bevorzugt wird die Einhaltung des Abstandes durch vier Räder der Vorrichtung gewährleistet.

In einer weitergebildeten Ausführungsform der Erfindung weist das Gehäuse oberhalb der Heizeinrichtung einen Reflektor und oberhalb des Reflektors ein Hitzeschutzblech auf, derart, dass zwischen Reflektor und Hitzeschutzblech ein Luftkanal ausgebildet wird. Durch die Ausbildung eines Luftkanals ist es möglich, durch eine Öffnung im Gehäuse mit einer thermischen Strömung heiße Primärluft auszutragen und damit eine Erwärmung des Gehäuses zu vermeiden. Insbesondere wird durch eine derartige Luftführung gewährleistet, dass das Gehäuse an der Oberfläche die zulässige Berührschutztemperatur nicht überschreitet. Im Gegensatz zur DE 35 44 101A1 bei der mit den Reflektoren Infrarot-Licht gebündelt und auf die Pflanzen gerichtet wurden, dient der Reflektor bei der erfindungsgemäßen Vorrichtung lediglich dazu, die Umgebung und insbesondere den Bediener vorder nach oben durch Wärmestrahlung und Konvektion resultierenden Temperaturerhöhung des Gehäusematerials zu schützen. Der Reflektor gemäß der Erfindung ist ein Bestandteil der mit dem Primärluft- und Sekundärluftstrom beschriebenen Luftführung. Die Länge der Reflexionsfläche des Reflektors in der DE 35 44 101 A1 beträgt mindestens 50 - 60 cm. Dadurch wird gemäß der DE 35 44 101A1 die Einwirkzeit der Infrarotstrahlung auf die Schadpflanze erhöht, da die maximale Temperatur nicht explizit in der DE 35 44 101A1 angegeben wird, sondern lediglich darauf hingewiesen wird, dass eine Temperatur von unter 100 Grad zum Absterben der Pflanzen durch dabei entstehende Toxine ausreicht.

Die Verwendung von Infrarot-Heizeinrichtungen an Stelle von Heißluft-Heizeinrichtungen hat den Vorteil, dass Infrarotstrahlungsgeräte weniger Leistung als Heißluftgeräte benötigen, weswegen größere Flächen in gleicher Zeit behandelt werden können. Steht bei einer Fläche von 250 m² eine Leistungsaufnahme von 1200 Watt an beträgt der Leistungsbedarf lediglich 4,8 Watt/cm³. Im Gegensatz hierzu benötigen Heißluftgeräte mehr als das 17fache der flächenbezogenen Leistung als Infrarotstrahlungsgeräte. Infrarotstrahlungsgeräte sind daher deutlich effizienter und Ressourcen schonender als Heißluftgeräte.

Die vorliegende Erfindung arbeitet mit einer Strahlungstemperatur die über 800 Grad. Durch die hohe Temperatur koaguliert nicht nur das Eiweiß, wie in der DE 35 44 101A1. Bei der vorliegenden Erfindung wird eine Länge der Strahlungsfläche von 30 cm, insbesondere 25 cm nicht überschritten. Gemäß der DE 35 44 101A1 muss die Länge mindestens 50 bis 60 cm betragen, um aufgrund der deutlich niedrigeren Einwirktemperatur eine längere Einwirkzeit und den gewünschten Effekt zu erreichen.

In einer bevorzugten Ausgestaltung ist vorgesehen, dass das Gehäuse an dem dem Luftkanal gegenüberliegenden Ende eine Öffnung aufweist, aus der die durch den Luftkanal geführte Luft ausgetragen werden kann. Insbesondere kann durch diese Öffnung auch beim Verbrennen der Pflanze entstehender Qualm abgeleitet werden.

Die Öffnung gemäß der Erfindung ist eine nach vorne gerichtete Auslassöffnung nach dem Prinzip der freien Konvektion. Im Gegensatz hierzu zeigt die EP 04 13 055B1 ein Gebläse, das die heiße Luft auf die zu behandelnde Oberfläche bläst und nach vorne gerichtet das Gehäuse verlässt. Hierbei handelt es sich bedingt durch das Gebläse um eine erzwungene Konvektion.

Eine besonders bevorzugte Luftführung wird erreicht, wenn das Hitzeschutzschild derart angeordnet ist, dass der Luftkanal sich zur Öffnung hin vergrößert.

Besonders bevorzugt ist vorgesehen, dass die Vorrichtung derart ausgestaltet ist, dass die Infrarotstrahlen auf eine Strahlungsfläche von 100 cm² bis 300 cm² einwirken. Vorteilhaft ist es, wenn die Strahlungsfläche durch eine Länge und eine Breite charakterisiert ist und das Verhältnis Länge zu Breite zwischen 1,6 und 1,8 liegt.

Um die Vorrichtung zur thermischen Wildkrautvernichtung über die zu vernichtenden Pflanzen zu führen, ist vorgesehen, dass das Gehäuse an einem Ende einen Stiel umfasst und wenigstens ein unter dem Stiel angeordnetes Rad, das für eine leichte Verfahrbarkeit der Vorrichtung sorgt. Unterstützend zu dem unterhalb des Stiels angeordneten wenigstens einen Rad kann an der Vorderseite des Gehäuses ein weiteres Radpaar vorgesehen sein, so dass das Gehäuse mit Hilfe der vier Räder oberhalb der mit Wildkraut oder Unkraut versehenen Fläche gehalten wird.

Bei der EP 04 13 055B1 erfolgt die Fortbewegung des Gerätes über den Boden mit Hilfe eines Rades im hinteren Bereich und einem Gleitschuh im vorderen thermischen Bearbeitungsbereich. Die vorliegende Erfindung verfügt im Gegensatz hierzu über vier Räder, die jeweils auf zwei Achsen im vorderen und im hinteren Bereich angeordnet sind. Das Gerät kann auf den vier Rädern wie ein Fahrzeug geführt werden und ist aufgrund des symmetrischen Aufbaus auch seitlich stabil, wohingegen die Vorrichtung gemäß der EP 04 13 055B mit nur einem Rad leicht zur Seite umkippen kann.

Neben der Vorrichtung gemäß der Erfindung gibt die Erfindung auch ein Verfahren zur thermischen Wildkraut- bzw. Unkrautbeseitigung mit einer Vorrichtung, umfassend eine Heizeinrichtung, ein Reflektor und ein oberhalb des Reflektors angeordnetes Hitzeschutzblech an, wobei das Verfahren dadurch gekennzeichnet ist, dass die durch die elektrische Heizeinrichtung erzeugte Infrarot-Hitzestrahlung auf eine Fläche von 100 cm² bis 300 cm² einwirkt und das dort vorhandene Unkraut oder Wildkraut mit Strahlungsenergie des bis zu 800°C heißen Heizelementes verbrennt, wobei zur Ableitung von Verbrennungsprodukten und zur Kühlung des Gehäuses die heiße Primärluft durch den Luftkanal der Vorrichtung zur Öffnung geleitet und abgeführt wird. Besonders bevorzugt ist es, wenn durch die Ableitung von Verbrennungsprodukten durch den Luftkanal die Oberfläche des Gehäuses derart gekühlt wird, dass die Berührungsschutztemperatur nicht überschritten wird. Neben dem Primärluftstrom zeichnet sich das erfindungsgemäße Verfahren dadurch aus, dass zwischen Hitzeschutzblech und dem Gehäuse ein Sekundärluftstrom geführt wird. Der Sekundärluftstrom dient im Wesentlichen dazu, das Gehäuse und insbesondere die Gehäuseoberfläche noch weiter zu kühlen. Hierzu wird der Sekundärluftstrom, der zwischen Hitzeschild und dem Gehäuse geführt wird, über Lüftungsschlitze aus dem Gehäuse herausgetragen.

Während die erfindungsgemäße Vorrichtung dem Anwender ausreichenden Schutz vor Verbrennungen bei der Berührung des Gehäuses im Betrieb bietet, muss nach Beendigung der Anwendung der Bediener das Gerät ausschalten und abkühlen lassen, bevor das Gerät an seinen Lagerplatz gebracht werden kann. Um auch dem Bediener oder Dritte Personen in der Abkühlphase, bei der das Gerät in der Regel unbeaufsichtigt ist, ausreichend Berührschutz zu bieten wird die Vorrichtung in eine Abkühlschutzeinheit eingestellt. Bei der Abkühlschutzeinheit handelt es sich um ein Gehäuse aus Stahlblech, insbesondere Edelstahl. Nach Beendigung der Anwendung wird die Vorrichtung zur thermischen Wildkrautbeseitigung in die Abkühlschutzeinheit eingeführt und mit einem an der Abkühlschutzeinheit schwenkbaren Haltebügel festgeklemmt. Zur Abkühlung wird das Gerät mit dem Griff auf den Boden gelegt. Die zu Beginn über 250°C heiße Luft strömt dann durch die Luftaustrittsöffnungen der Abkühlschutzeinheit. Durch die Sandwich-Bauweise der Abkühlschutzeinheit bietet die Unterseite derselben ausreichend Schutz vor Verbrennungen bei Berührung. Der Abkühlvorgang dauert ca. 15 Minuten, bis die Lufttemperatur an der Luftaustrittsöffnungen auf ca. 60°C abgesunken ist. Nach dem Abkühlvorgang kann das Gerät zur Wildkrautvernichtung mit der montierten Abkühlschutzeinheit eingelagert werden.

Die Erfindung soll nachfolgend anhand der Zeichnungen näher beschrieben werden.

### Es zeigen:

- Fig. 1: eine dreidimensionale Ansicht des gesamten Systems;
- Fig. 2: eine Ansicht des Systems von unten;
- Fig. 3: eine Schnittansicht des Systems;
- Fig.4: eine Vorderansicht des Systems;
- Fig. 5: Ansicht einer Abkühlschutzeinheit;
- Fig. 6: Abkühlschutzeinheit, montiert an einer Vorrichtung zur Wildkrautvernichtung;
- Fig. 7: Vorrichtung zur Wildkrautvernichtung mit Abkühlschutzeinheit, abgestellt am Boden.

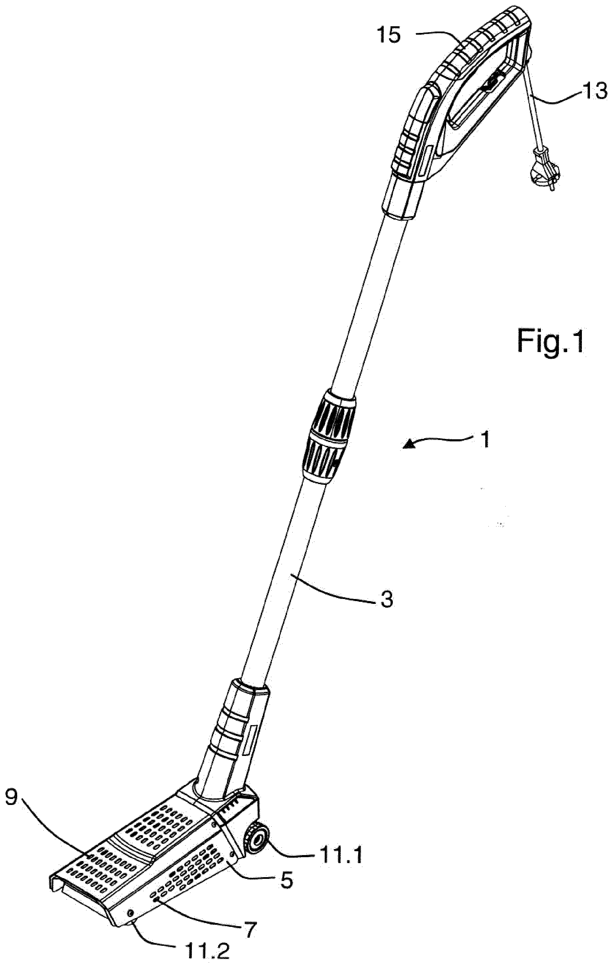

Figur 1 zeigt die erfindungsgemäße Vorrichtung 1 zur thermischen Unkrautbeseitigung, umfassend einen Stiel 3 zur Führung des Gehäuses 5, in dem die Heizeinrichtung zur Erzeugung von Infrarotstrahlung untergebracht ist. Des Weiteren zu erkennen sind die seitlichen 7 und oberen Lüftungsschlitze 9, aus denen der Sekundärluftstrom, der zwischen Hitzeschutzblech und Reflektor geführt wird, ausgetragen wird. Zu erkennen auch zwei der insgesamt vier Räder 11.1, 11.2 der Vorrichtung. Zwei der vier Räder sind unterhalb des Stiels angeordnet, zwei weitere Räder an der Vorderseite des Gehäuses 5. Die in dem Gehäuse 5 untergebrachte, in Figur 1 nicht dargestellte Heizeinrichtung wird mit Strom betrieben. Hierfür verfügt der Stiel 3 über einen Stromanschluss 13 Der Stiel 3 ist in seiner Höhe verstellbar und drehbar. Am Stiel 3 ist ein Handgriff 15 angebracht.

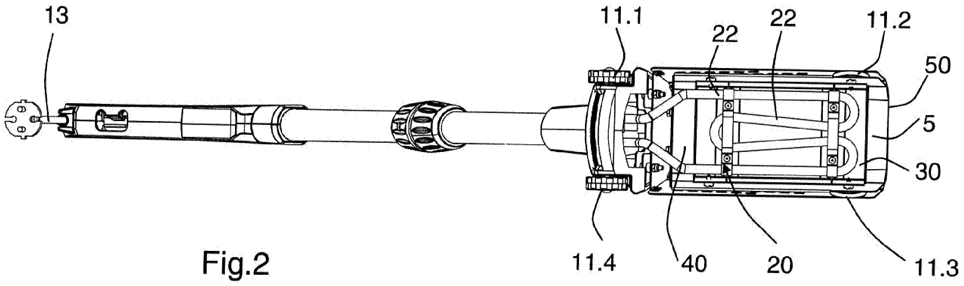

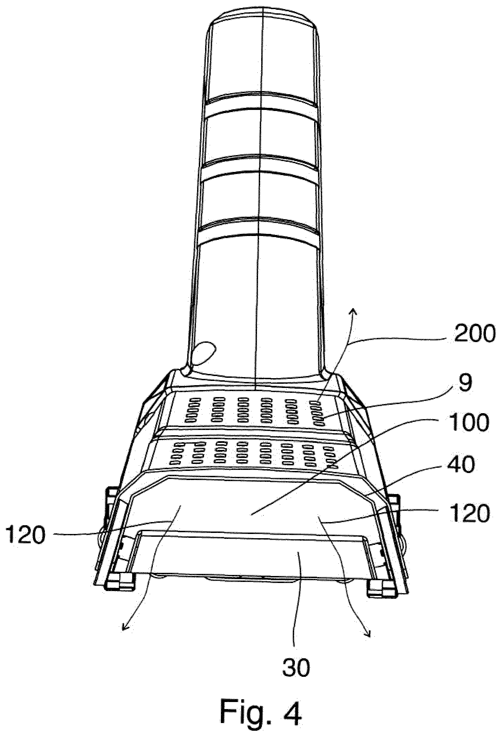

Die Heizeinrichtung ist näher Figur 2 zu entnehmen. Gleiche Bauteile wie in Figur 1 sind mit denselben Bezugsziffern belegt. Gut zu erkennen sind die insgesamt vier Räder 11.1, 11.2, 11.3 und 11.4, auf denen das Gehäuse 5 über den Boden geführt wird. Deutlich zu erkennen in Figur 2 ist auch die Heizeinrichtung 20, die vorliegend Heizschlange 22 umfasst, die bei Beaufschlagung mit elektrischem Strom aufgrund des Widerstandes glühen und damit Infrarotwärme abstrahlen. Die von den Heizschlangen 22 überdeckte Fläche beträgt zwischen 100 cm² bis 300 cm². Besonders bevorzugt ist es, wenn die Länge des überdeckten Bereiches zur Breite ein Verhältnis von 1,6 zu 1,8 aufweist. Die Stromversorgung der Heizschlange 22 erfolgt über den elektrischen Anschluss 13, beispielsweise an eine Haushaltsstromversorgung. In Figur 2 ebenfalls zu erkennen ist der Reflektor 30, der oberhalb der Heizschlange 22 der Heizeinrichtung angeordnet ist und dafür sorgt, dass die von der Heizschlange 22 emittierte Infrarotstrahlung in Richtung des Bodens, wo das Unkraut abgebrannt werden soll, reflektiert wird. Ein Reflektor 30 sorgt dafür, dass die Wärme gleichmäßig über die Fläche von 100 cm² bis 300 cm² einwirkt und das dort vorhandene Unkraut oder Wildkraut durch die Strahlung der hohen Temperaturen, die mehr als 800° C betragen können, vernichtet wird. Oberhalb des Reflektors 30 ist erfindungsgemäß das Hitzeschutzblech oder Hitzeschutzschild 40 angeordnet. Zwischen Hitzeschutzblech oder Hitzeschutzschild 40 und Reflektor 30 wird dann ein Luftkanal ausgebildet, in dem ein Primärluftstrom geführt wird, und zwar zu einer Öffnung (nicht gezeigt) an der Vorderseite 50 des Gehäuses. Die Vorderseite 50 des Gehäuses mit Öffnung ist detailliert in Fig.4 gezeigt.

Die Austragung des Primärluftstroms durch die Öffnung an der Frontseite 50 des Gehäuses sorgt dafür, dass Verbrennungsprodukte, die beim Verbrennen des Unkrauts mit Hilfe der Heizeinrichtung 20 entstehen, aus dem Gehäuse ausgetragen werden. Zudem sorgt der Luftstrom dafür, dass die Gehäuseoberfläche gekühlt wird, und zwar derart, dass die Berührschutztemperatur nicht überschritten wird.

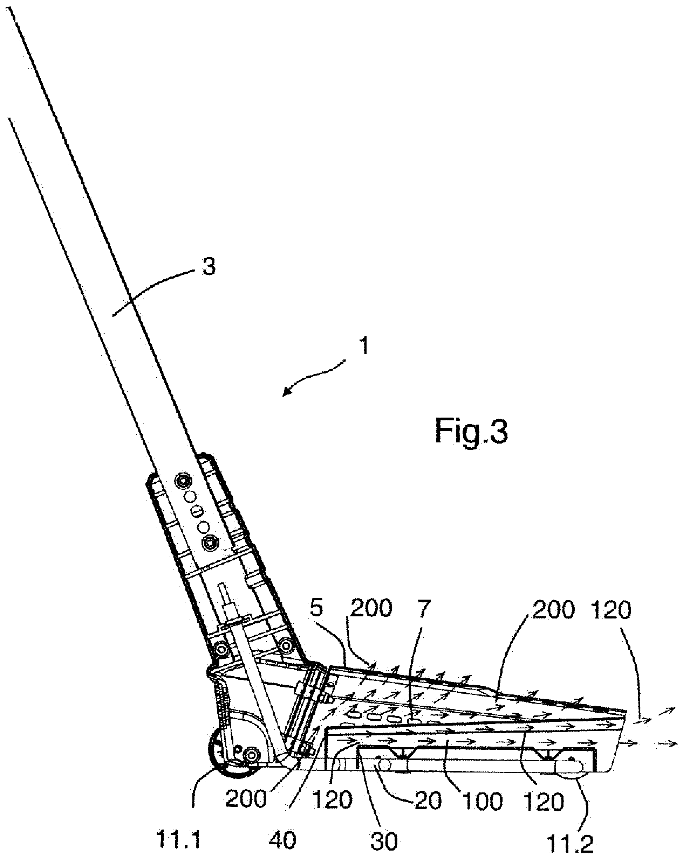

Figur 3 zeigt eine Schnittansicht der erfindungsgemäßen Vorrichtung. Gleiche Bauteile wie in den Figuren 1 und 2 sind mit denselben Zahlen belegt. Deutlich zu erkennen ist der Stiel 3 sowie das Gehäuse 5, in dem die Heizeinrichtung, wie in Figur 2 dargestellt, untergebracht ist. Des Weiteren sind zwei Räder 11.1 und 11.2 der insgesamt vier Räder an der Vorderseite und der Rückseite des Gehäuses 5 gezeigt. Mit Hilfe der Räder wird ein Abstand der Heizeinrichtung zur behandelnden Fläche, in der das Unkraut oder Wildkraut verbrannt werden soll, eingestellt. Der Abstand der Heizeinrichtung zur behandelnden Fläche beträgt bevorzugt zwischen 2mm und 20 mm. Bei zu geringem Abstand kann die Vorrichtung nicht mehr bewegt werden, bei Abständen größer 20 mm ist die Einwirkdauer für eine effektive Unkrautbekämpfung zu kurz. Deutlich zu erkennen auch die seitlichen Auslassschlitze des Gehäuses. Aus der Schnittansicht geht die Anordnung des Reflektors 30 oberhalb der Heizeinrichtung 20 hervor. Der Reflektor 30 oberhalb der Heizeinrichtung 20 sorgt dafür, dass die von der Heizeinrichtung abgestrahlte Infrarotstrahlung nach unten umgelenkt und gleichmäßig über die zu erwärmende Fläche verteilt wird.

Erfindungsgemäß ist in dem Gehäuse 5 vorgesehen, oberhalb des Reflektors 30 ein Hitzeschutzblech oder auch Hitzeschutzschild 40 vorzusehen. Das Hitzeschutzblech oder Hitzeschutzschild 40 dient dazu, zwischen Reflektor 30 und Hitzeschutzblech 40 einen Luftkanal 100 auszubilden, der sich bevorzugt in Richtung der an der Vorderseite des Gehäuses angeordneten Öffnung erstreckt. Bevorzugt ist der Luftkanal ein sich vergrößernder Luftkanal. Über den Luftkanal 100 strömt Luft 120 ein und wird über die Öffnung 110, wie dargestellt, ausgetragen. Die Luftströmung 120 in dem Luftkanal dient zum einen dazu, eventuelle Verbrennungsprodukte, die aufgrund der Verbrennung von Unkraut mit der Heizeinrichtung entstehen, auszutragen und die Oberseite des Gehäuses 5 zu kühlen. Neben dem Primärluftstrom 100 weist die erfindungsgemäße Vorrichtung aber auch einen Sekundärluftstrom 200 auf, der außerhalb des Luftkanals 100 geführt wird und von unten nach oben im Gehäuse aufsteigt und hierdurch das Gehäuse derart kühlt, dass die Berührungstemperatur an der Oberseite des Gehäuses nicht überschritten wird. Der Austritt des zweiten Luftstroms 200 beispielsweise erfolgt über Öffnungen 7 bzw. Lüftungsschlitze 7, die an der Seite des Gehäuses angeordnet sind oder an der Oberseite (nicht dargestellt). Dadurch, dass der Sekundärluftstrom deutlich kühler ist als der Primärluftstrom wird ein Anstieg der Oberflächentemperatur an der berührbaren Fläche vermieden.

Figur 4 zeigt eine Vorderansicht der erfindungsgemäßen Vorrichtung. Gleiche Bauteile wie in den Figuren 1 bis 3 sind mit denselben Bezugsziffern belegt. Deutlich zu erkennen sind Lüftungsschlitze 9 in der Gehäusedecke zusätzlich oder alternativ zu seitlichen Lüftungsschlitzen 7 über die der Sekundärluftstrom 200 abgeführt wird. Der Primärluftstrom 120 wird im Luftkanal 100 zwischen Hitzeschutzblech 40 und Reflektor 30 geführt. Da die Vorderseite der Vorrichtung ohne Abdeckung ausgeführt ist, tritt der Primärluftstrom 120 aus dem Luftkanal 100 nach vorne aus, wie dargestellt. Hierdurch werden zum einen Verbrennungsprodukte ausgetragen, zum anderen die Gehäuseoberfläche gekühlt.

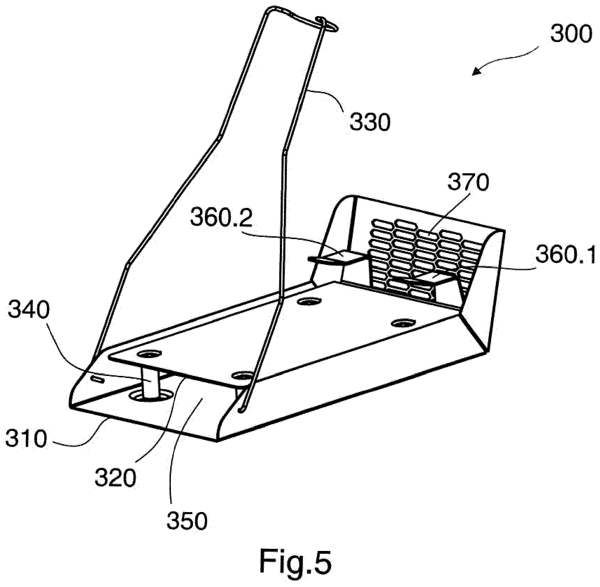

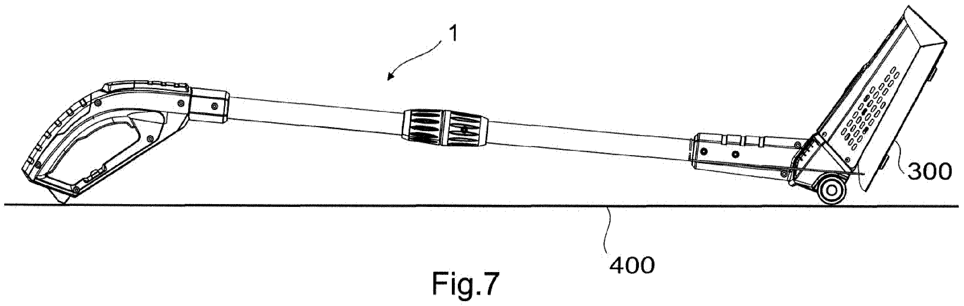

Figur 5 zeigt die Abkühlschutzeinheit 300. Die Abkühlschutzeinheit 300 besteht im Einzelnen aus einer Schutzblende 310 und einer Reflektorblende 320 sowie einem Haltebügel 330 zur werkzeuglosen Montage an das Gerät zur Wildkrautvernichtung. Die Bleche bestehen aus Stahl, vorzugsweise aus Edelstahl. Die Reflektorenblende 320 schirmt die bis zu 800°C hießen Heizschlangen gegen unbeabsichtigtes Berühren durch den Anwender oder einer dritten Person ab. Die Reflektorblende 320 heizt sich dabei weit über 200°C auf. Um an dieser Stelle ausreichenden Berührschutz gegen Verbrennung zu gewährleisten, wird in einem Abstand von 25 mm die Schutzblende 310 mit Hilfe von vier Isolatoren 340, bevorzugt aus keramischen Werkstoffen oder hitzebeständigen Kunststoffen wie PTFE, befestigt. Durch die Sandwich-Bauweise der beiden Bleche entsteht in dem Zwischenraum ein Luftkanal 350, der einerseits die Wärme der Reflektorblende 320 nach oben abführt und andererseits die Oberfläche der Schutzblende 310 auf eine Temperatur unterhalb des Berührschutzwertes in der Abkühlposition in Figur 7 reduziert. Zum Abführen der Luft umfasst die Schutzblende 310 Luftaustrittsöffnungen 370.

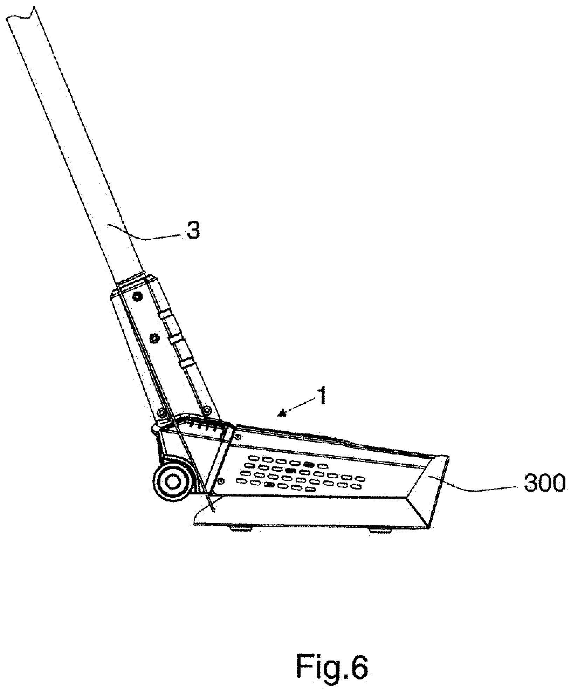

Figur 6 zeigt die an das thermische Gerät 1 zur Wildkrautvernichtung montierte Abkühlvorrichtung 300. Bei der Montage der Abkühlschutzeinheit 300 wird die Vorrichtung auf die Einheit aufgesetzt und nach vorne geschoben, bis die zwei Haltelaschen 360.1, 360.2 an der Reflektorblende 320 oberhalb des Reflektors 30 der Vorrichtung 1 eingreifen. Der hintere Teil der Abkühlschutzeinheit 300 wird dann durch Arretieren des drehbaren Haltebügels 330 am Stiel 3 fixiert. In der Darstellung wird der Haltebügel 330 von vorne auf den Stiel 3 arretiert. In einer weiteren Ausführung kann der Haltebügel 330 auch von hinten an den Stiel 3 arretiert werden.

In Figur 7 ist die Vorrichtung 1 eingebracht in die Abkühlschutzeinheit 300 und abgestellt am Boden 400 gezeigt. Bei der am Boden 400 abgelegten Vorrichtung 1 strömt die heiße Luft nach oben und kann aus den Luftaustrittsöffnungen 370 an der Schutzblende 310 austreten.

In der erfindungsgemäßen Vorrichtung wird erstmals eine Vorrichtung zum Verbrennen von Wildkraut oder Unkraut angegeben, bei dem sicher vermieden wird, dass sich das Gehäuse zu stark erwärmt. Des Weiteren werden Verbrennungsprodukte ausgetragen

Ein wesentlicher Vorteil der doppelten Luftkanalführung aufgeteilt in Primär- und Sekundärluft ist, dass die schneller strömende, heißere Primärluft die Verbrennungsgase mitzieht und nach vorne, also vom Bediener weg gerichtet, durch den Primärluftkanal ableitet. Der Bediener wird somit nicht unmittelbar durch den Qualm der Verbrennungsgase belästigt. Des Weiteren wird auch eine Abkühlschutzeinheit angegeben um auch nach Beendigung der Anwendung dem Bediener Berührschutz zu bieten.

## Patentansprüche

1. Vorrichtung (1) zur thermischen Wildkrautbeseitigung mit
einer Heizeinrichtung (20) zur Erzeugung von Infrarot-Hitzestrahlen und einem Gehäuse (5) mit Lüftungsschlitzen (7, 9), in denen die Heizeinrichtung angeordnet ist,
wobei
die Heizeinrichtung eine elektrische Heizeinrichtung zur Erzeugung von Infrarot-Hitzestrahlen ist und die Vorrichtung Abstandmittel, insbesondere Räder umfasst, derart dass die Vorrichtung in einem Abstand zum Boden gehalten wird und der Abstand im Bereich 1 mm bis < 30 mm, bevorzugt 2 mm bis 20 mm, insbesondere 4 bis 6 mm liegt derart, dass Unkraut oder Wildkraut durch Einwirken der elektrischen Heizeinrichtung effizient bekämpft wird,
**dadurch gekennzeichnet, dass**
in dem Gehäuse (5) oberhalb der Heizeinrichtung (20) ein Reflektor (30) und oberhalb des Reflektors (30) ein Hitzeschutzblech (40) angeordnet ist, derart, dass zwischen Reflektor (30) und Hitzeschutzblech (40) ein Luftkanal (100) ausgebildet wird, so dass ein Primärluftstrom über eine Öffnung (110) aus dem Luftkanal (100) ausgetragen wird
und
außerhalb des Luftkanals (100) ein Sekundärluftstrom (200) zwischen dem Hitzeschutzblech (40) und dem Gehäuse (5) geführt wird, der durch die Lüftungsschlitze (7, 9) des Gehäuses (5) oben und seitlich aus dem Gehäuse (5) abgeführt wird.

2. Vorrichtung nach Anspruch 1,
**dadurch gekennzeichnet, dass**
die Öffnung (110) im Gehäuse (5) an dem Luftkanal (100) gegenüberliegenden und vom Bediener abgewandte Enden angeordnet ist.

3. Vorrichtung nach Anspruch 2,
**dadurch gekennzeichnet, dass**
das Hitzeschutzblech (40) derart angeordnet ist, dass der Luftkanal sich zur Öffnung hin vergrößert.

4. Vorrichtung nach einem der Ansprüche 1 bis 3,
**dadurch gekennzeichnet, dass**
die Vorrichtung derart ausgebildet ist, dass die Infrarotstrahlen auf eine Strahlungsfläche von 100 cm² bis 300 cm² einwirken, wobei die Strahlungsfläche insbesondere eine Länge und eine Breite aufweist und um das Verhältnis Länge zu Breite zwischen 1,6 und 1,8 liegt.

5. Vorrichtung nach einem der Ansprüche 1 bis 4,
**dadurch gekennzeichnet, dass**
die Vorrichtung einen Stiel (3) an dem der Öffnung gegenüberliegenden Ende des Gehäuses (5) und wenigstens ein unter dem Stiel (3) angeordnetes Rad (11.1, 11.4) umfasst.

6. Verfahren zur thermischen Wildkrautbeseitigung mit einer Vorrichtung gemäß einem der Ansprüche 1 bis 5,
**dadurch gekennzeichnet, dass**
eine Heizeinrichtung (20) Infrarot-Hitzestrahlung auf eine Fläche von 100 cm² bis 300 cm² abgibt.

7. Verfahren nach Anspruch 6,
**dadurch gekennzeichnet, dass**
das in der Fläche vorhandene Wildkraut durch Temperaturen von über 800° C vernichtet wird, wobei insbesondere zur Ableitung von Verbrennungsprodukten heiße Primärluft durch den Luftkanal (100) zur Öffnung im Gehäuse (5) geleitet wird.

8. Verfahren nach einem der Ansprüche 6 bis 7,
**dadurch gekennzeichnet, dass**
durch die Ableitung von Verbrennungsprodukten durch den Luftkanal (100) die Oberfläche des Gehäuses (5) derart gekühlt wird, dass die Berührschutztemperatur nicht überschritten wird.

## Claims

1. Device (1) for thermal weed removal having a heating device (20) for generating infrared heat rays and a housing (5) with ventilation slots (7, 9) in which the heating device is arranged, wherein the heating device is an electrical heating device for generating infrared heat rays and the device comprises spacing means, in particular wheels, in such a way that the device is kept at a distance from the ground and the distance is in the range 1 mm to <30 mm, preferably 2 mm to 20 mm, in particular 4 to 6 mm, in such a way that weeds or wild weeds are efficiently controlled by the action of the electric heating device,
**characterized in that**
a reflector (30) is arranged in the housing (5) above the heating device (20) and a heat protection plate (40) is arranged above the reflector (30) in such a way that an air duct (100) is formed between the reflector (30) and the heat protection plate (40), so that a primary air flow is discharged from the air duct (100) via an opening (110) and
a secondary air flow (200) is guided outside the air duct (100) between the heat protection plate (40) and the housing (5), which secondary air flow (200) is discharged from the housing (5) at the top and laterally through the ventilation slots (7, 9) of the housing (5).

2. Device according to claim 1, **characterized in that** the opening (110) in the housing (5) is arranged at ends opposite the air duct (100) and facing away from the operator.

3. Device according to claim 2, **characterized in that** the heat protection plate (40) is arranged in such a way that the air duct enlarges towards the opening.

4. Device according to one of claims 1 to 3, **characterized in that** the device is designed in such a way that the infrared rays act on a radiation area of 100 cm² to 300 cm², wherein the radiation area in particular has a length and a width and is between 1.6 and 1.8 by the length-to-width ratio.

5. Device according to one of claims 1 to 4, **characterized in that** the device comprises a stem (3) at the end of the housing (5) opposite the opening and at least one wheel (11.1, 11.4) arranged under the stem (3).

6. Method for thermal weed removal with a device according to one of claims 1 to 5, **characterized in that** a heating device (20) emits infrared heat radiation onto an area of 100 cm² to 300 cm².

7. Method according to claim 6, **characterized in that** the wild weeds present in the area are destroyed by temperatures of more than 800°C, wherein hot primary air is conducted through the air duct (100) to the opening in the housing (5), in particular for discharging combustion products.

8. Method according to one of claims 6 to 7, **characterized in that** by discharging combustion products through the air duct (100) the surface of the housing (5) is cooled in such a way that the contact protection temperature is not exceeded.

## Revendications

1. Dispositif (1) pour l'élimination thermique des mauvaises herbes avec un équipement chauffant (20) destiné à produire des rayons thermiques infrarouges et un boîtier (5) avec des fentes d'aération (7, 9), dans lequel l'équipement chauffant est disposé,
dans lequel l'équipement chauffant est un équipement chauffant électrique destiné à produire des rayons thermiques infrarouges et le dispositif comprend des moyens d'écartement, en particulier des roues, de telle manière que le dispositif est maintenu à distance du sol et que la distance se situe dans la plage de 1 mm à < 30 mm, de préférence de 2 mm à 20 mm, en particulier de 4 à 6 mm, de telle manière que les mauvaises herbes ou les herbes folles sont combattues efficacement par l'action de l'équipement chauffant électrique,
**caractérisé en ce**
**qu'**un réflecteur (30) est disposé dans le boîtier (5) au-dessus de l'équipement chauffant (20) et une tôle de protection thermique (40) est disposée au-dessus du réflecteur (30), de telle manière qu'un canal d'air (100) est formé entre le réflecteur (30) et la tôle de protection thermique (40), de sorte qu'un flux d'air primaire est déchargé du canal d'air (100) par une ouverture (110) et qu'un flux d'air secondaire (200) est guidé à l'extérieur du canal d'air (100) entre la tôle de protection thermique (40) et le boîtier (5), lequel est évacué du boîtier (5) sur le dessus et latéralement à travers les fentes d'aération (7, 9) du boîtier (5).

2. Dispositif selon la revendication 1,
**caractérisé en ce**
**que** l'ouverture (110) dans le boîtier (5) est disposée à des extrémités opposées au canal d'air (100) et éloignées de l'utilisateur.

3. Dispositif selon la revendication 2,
**caractérisé en ce**
**que** la tôle de protection thermique (40) est disposée de manière à ce que le canal d'air s'agrandisse vers l'ouverture.

4. Dispositif selon l'une des revendications 1 à 3,
**caractérisé en ce**
**que** le dispositif est conçu de telle manière que les rayons infrarouges agissent sur une surface de rayonnement de 100 cm² à 300 cm², la surface de rayonnement présentant en particulier une longueur et une largeur, et le rapport longueur sur largeur étant compris entre 1,6 et 1,8.

5. Dispositif selon l'une des revendications 1 à 4,
**caractérisé en ce**
**que** le dispositif comprend un manche (3) à l'extrémité du boîtier (5) opposée à l'ouverture et au moins une roue (11.1, 11.4) disposée sous le manche (3).

6. Procédé pour l'élimination thermique des mauvaises herbes avec un dispositif selon l'une des revendications 1 à 5,
**caractérisé en ce**
**qu'**un équipement chauffant (20) émet un rayonnement thermique infrarouge sur une surface de 100 cm² à 300 cm².

7. Procédé selon la revendication 6,
**caractérisé en ce**
**que** les herbes folles présentes dans la surface sont détruites par des températures supérieures à 800 °C, de l'air primaire chaud étant conduit à travers le canal d'air (100) vers l'ouverture du boîtier (5), en particulier pour évacuer les produits de combustion.

8. Procédé selon l'une des revendications 6 à 7,
**caractérisé en ce**
**que** l'évacuation des produits de combustion à travers le canal d'air (100) refroidit la surface du boîtier (5) de telle manière que la température de protection contre les contacts n'est pas dépassée.
